# EUROPEAN PATENT APPLICATION

(11) **EP 4 759 118 A1**
(43) Date of publication of application: **17.06.2026**
(21) Application number: 24219595.6
(22) Date of filing: 12.12.2024
(51) Int. Cl.: A01D 43/08, A01D 43/14, A01D 75/18

(54) **FORAGE HARVESTER WITH WATER INJECTION SYSTEM**

(71) Applicant: CNH Industrial Belgium N.V., 8210 Zedelgem (BE)
(72) Inventor: Vermander, Jeroen J.M., 8210 Zedelgem (BE); Debbaut, Thomas, 8210 Zedelgem (BE); Mortier, Geert, 8210 Zedelgem (BE); Teetaert, Pierre E., 8210 Zedelgem (BE); Depestel, Bernard, 8210 Zedelgem (BE); Van Belleghem, Stijn, 8210 Zedelgem (BE); Vanden Broucke, Jan-Pieter, 8210 Zedelgem (BE)
(74) Representative: CNH Industrial IP Department

(57) **Abstract**

The harvester (1) comprises a cutter drum (8) for cutting up crops harvested from the ground. Inside the harvester, a stream of cut particles is propelled along a discharge path, comprising a wear plate (10) facing the cutter drum, a concave (11), an accelerator (15) for further driving the particle stream upward through a tower duct, and a discharge spout (3). The harvester comprises a nozzle assembly (28) for discharging water (or an equivalent liquid) in the downstream direction of the discharge path to thereby mitigate plug formation. The nozzle assembly is mounted on the concave (11), in a position that enables impingement of the discharged liquid on the concave at a location that is upstream of the impact zone of the particle stream, when the header is in a harvesting position and the cutter drum is rotating within a standard operational speed range.

## Description

### Field of the Invention

The present invention is related to self-propelled forage harvesters (SPFHs) suitable for collecting grass or similar crops from a field.

### State of the art.

Self-propelled forage harvesters are used to collect crops like grass, corn or sorghum from a field, either by cutting the crop and collecting it directly or by gathering the crop after it has been cut and left on the field in the form of swaths. The harvester is fitted with a header to collect the stalks and move them to a centrally placed inlet at the front of the harvester, at which point the crops are taken into the body of the harvester by a feed roll assembly. From there, the crops are fed to a rotating cutter drum which processes the stalks into smaller particles. A stream of these particles is propelled by an accelerator towards and through a curved spout that can be positioned to eject the particles into a receiving trailer towed by a tractor alongside or behind the forage harvester.

At various places along the discharge path of the cut crop particles, a buildup of the particles may occur which can lead to a blockage of the trajectory. Such crop buildup is also referred to as plugging or plug formation and the occurrence of this phenomenon may depend on various conditions such as the crop type and humidity.

Previous remedies against plug formation and blockage have been proposed, including the use of plugging detectors and the application of water injection systems. A combination of these solutions is described in patent publication document EP2944182.

The cited document discloses a flow generator mounted on the wear plate facing the cutter drum, or on the concave downstream of the wear plate. The flow generator includes a plurality of nozzles distributed along the width of the discharge path and is configured to produce a fluid, for example water or a mixture of air and water. The fluid is injected on a surface of the discharge path to thereby mitigate the plug formation. The detection of plug formation is described using a pressure sensor or a temperature sensor. A control unit activates the flow generator on the basis of signals received from a sensor.

In this prior art configuration however, the fluid injection is not optimized in terms of the interaction between the fluid and the ejected crop material, which may lead to an inadequate effect of the injected fluid. Crop particles may be deposited onto the flow generator, thereby reducing the effectiveness of the water injection. Mounting the flow generator requires drilling holes in the concave for creating a flow path for the water towards the nozzles. Plug detection by the cited sensor types is also suboptimal, leading to missed detection of plug formation or the unnecessary application of fluid injection which may lead to deterioration of crop quality.

### Summary of the invention

The invention is related to a self-propelled forage harvester and to a method for operating the harvester, as described in the appended claims. The harvester comprises a cutter drum for cutting up crops harvested from the ground as the harvester moves along a harvesting trajectory. Inside the harvester, a stream of cut particles is propelled along a discharge path, comprising a wear plate facing the cutter drum, a concave, an accelerator for further driving the particle stream upward through a tower duct, after which the stream deviates into the direction of a spout that eventually ejects the particles from the harvester. The harvester comprises a nozzle assembly for discharging water (or an equivalent liquid) in the downstream direction of the discharge path to thereby mitigate plug formation at one or more locations along the path. The nozzle assembly is mounted on the concave, in a position that enables impingement of the discharged water on the concave at a location that is upstream of the impact zone of the particle stream, when the header is in a harvesting position and the cutter drum is rotating within a standard operational speed range. According to preferred embodiments, the nozzle assembly is mounted at least partially in an overlap area between the wear plate and the concave. Specifically advantageous embodiments are characterized by a nozzle assembly comprising a collector mounted below the upstream edge of the concave and tube-shaped nozzles extending upward from the collector and bent around said upstream edge to an orientation that enables discharging liquid in the downstream direction.

Some embodiments include a second nozzle assembly arranged in the spout, in a location enabling discharged liquid streams to impinge on an interior upper surface of the spout at a location upstream of a second impact zone of the particle stream.

According to embodiments of the harvester, one or more sensors may be included, configured to detect crop buildup along the discharge path, wherein the output of the sensors may be coupled to a control unit configured to enable activation of the nozzle assembly on the concave and, if present, of the second nozzle assembly in the spout, when crop buildup is detected.

Impingement of water or equivalent liquid flows upstream of the impact zone of the particle stream is advantageous in that the interaction of the water with the particle stream is optimized in terms of removing crop buildup efficiently, thereby decreasing the probability of large crop accumulation and blockage along the discharge path. The location of the nozzle assembly on an upstream part of the concave enables realizing the assembly in a compact manner that does not require drilling holes in the concave, and ensures that the nozzle assembly is outside of the trajectory of the particle stream. Crop accumulation on the nozzle assembly is avoided, so that less cleaning of the nozzles is required to maintain good liquid flow.

### Brief description of the figures

Figure 1 is an image illustrating the discharge of chopped crop particles from a self-propelled forage harvester into a trailer being towed alongside the harvester.
Figure 2 shows a number of functional components of a self-propelled forage harvester as known in the prior art.
Figures 3 and 4 indicate the location of the nozzle assembly according to embodiments of the invention.
Figures 5 and 6 illustrate a real-life nozzle assembly in accordance with an embodiment of the invention.
Figure 7 illustrates an embodiment wherein the harvester comprises a second nozzle assembly in the spout of the harvester.
Figure 8 illustrates a real-life example of an embodiment in accordance with Figure 7.
Figure 9 illustrates possible locations of sensors for detecting plug formation in a harvester according to the invention.

### Detailed description of preferred embodiments of the invention

Preferred embodiments will now be described with reference to the drawings. The detailed description is not limiting the scope of the invention, which is defined only by the appended claims.

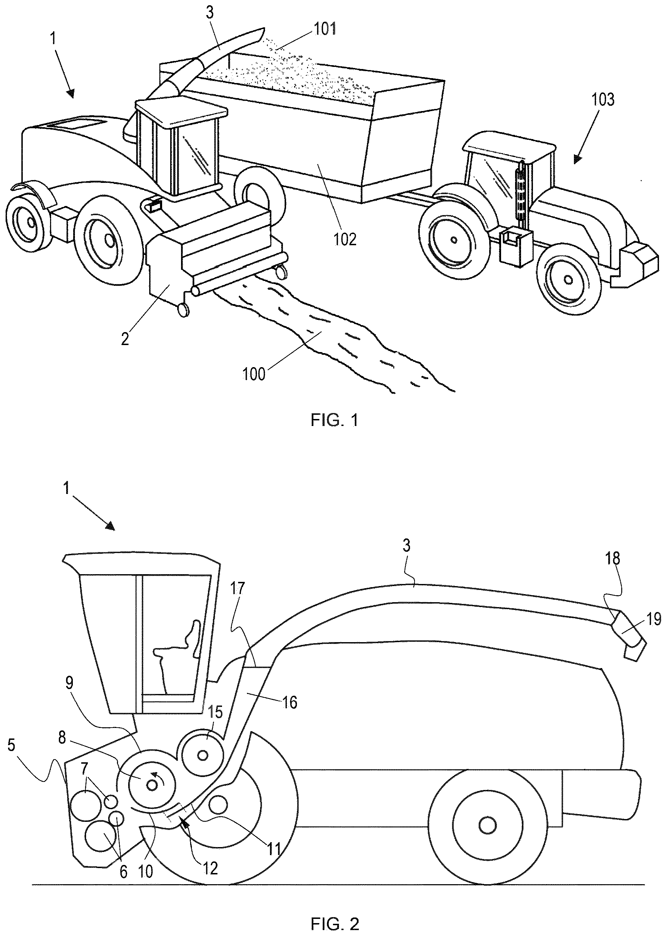

Figure 1 illustrates a self-propelled forage harvester 1 as known in the art. The harvester is collecting and processing grass from a field through a header 2 mounted at the front of the harvester. Grass swathes 100 are lying along parallel trajectories on the field, having been cut previously, and the driver of the harvester 1 follows these trajectories to collect and process the grass into finely cut particles. A stream of the cut particles 101 is ejected from the spout 3 of the harvester and discharged into a trailer 102 towed by a tractor 103 that is driven alongside the harvester 1.

A number of active components of the known forage harvester 1 are illustrated in Figure 2. The header is not shown in the drawing. When attached to the harvester, the header collects the grass and delivers it to an inlet section 5 at the front of the harvester. Immediately behind this inlet section 5, a feed roll assembly is positioned, comprising a lower and an upper set of rotatable feed rolls 6 and 7, configured to move the received crops in the form of a mat of crops between the upper and lower feed rolls towards a rotatable cutter drum 8 mounted in a cutter drum housing 9.

The cutter drum 8 is fitted with knives passing by a stationary shear bar (not shown) as the drum 8 rotates in the indicated direction, thereby cutting the advancing crops into particles which are further transported between the cutter drum 8 and a wear plate 10. The wear plate 10 may be in a fixed position relative to the cutter drum 8. However according to some harvester designs, the wear plate 10 is pivotable about the cutter drum's rotation axis, and the angular position of the wear plate 10 is linked to the header position. In these cases, the wear plate 10 is in a position as illustrated in Figure 2, when the header is in a harvesting position, i.e. held at a harvesting height above ground level, as shown in Figure 1.

From the wear plate 10, the stream of chopped particles is propelled onto a concave guide surface 11, commonly referred to as the 'concave'. As illustrated, there is an overlap area 12 between the wear plate 10 and the concave 11 when the wear plate is in the illustrated harvesting position. The concave 11 guides the stream of particles towards an accelerator 15, which may for example be a paddle accelerator or a blower. The accelerator 15 further propels the particles into a tower duct 16 and onwards into the spout 3. The concave 11 may comprise different parts, the first of which is usually a curved steel plate that receives the impact of the particle stream ejected from the cutter drum. The spout 3 is mounted to be rotatable about an essentially vertical axis, while its inlet section 17 is coupled to the outlet of the tower duct 16, so that the particle stream is propelled through the spout 3. A deflector 19 may be coupled to the outlet section 18 of the spout 3. The angular position of the deflector 19 can be controlled to direct the discharged particle stream as it is ejected from the spout 3.

The wear plate 10, concave 11, accelerator 15, tower 16 and spout 3 are all part of the discharge path of the harvester, i.e. the trajectory of a stream of cut particles from the location where the incoming crop is chopped into said particles, to the ejection of the stream of particles from the spout 3. Additional components could be included in the discharge path. For example a forage harvester used for corn harvesting comprises processing rolls between the concave and the accelerator.

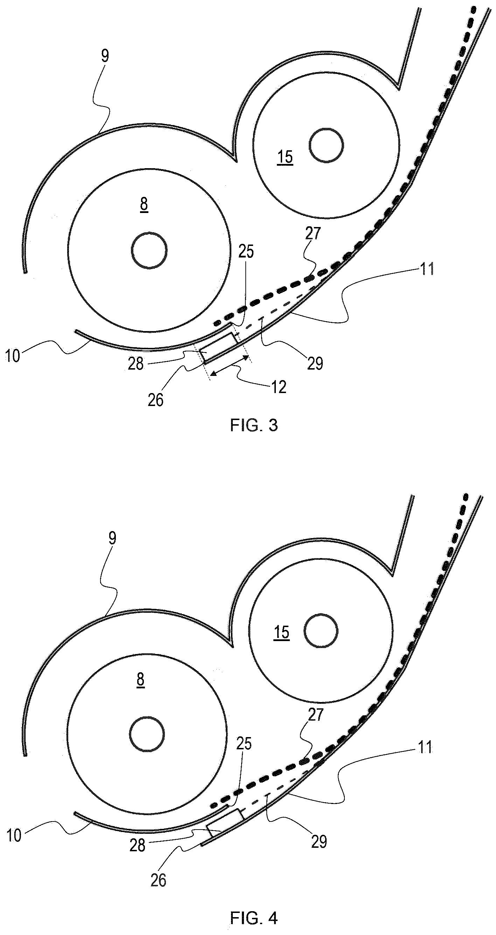

Figure 3 represents a detail of the area comprising the cutter drum 8 and the components in its vicinity, in a harvester according to an embodiment of the invention. The housing 9, the wear plate 10 and the concave 11 are indicated and can be in accordance with known configurations. As in the prior art configuration, there is an overlap area 12 between the wear plate 10 and the concave 11, defined by the distance between the exit edge 25 of the wear plate 10 and the upstream edge 26 of the concave 11. The thick dotted line 27 represents the path of a stream of particles ejected from the exit edge 25 of the wear plate 10, when the harvester is in operation with the header in a harvesting position and the cutter drum 8 rotating at a given speed. The actual stream of particles may be thicker than the line 27 which is intended only to give an indication of the direction and path of the stream. According to the embodiment shown in Figure 3, a nozzle assembly 28 is mounted on the concave 11 in the overlap area 12. The nozzle assembly 28 comprises a plurality of nozzles distributed along the width of the concave 11 and configured to produce parallel streams 29 of liquid, preferably water, in the downstream direction of the concave.

The function of the nozzle assembly 28 is to reduce plugging of the particle stream 27 in the discharge path of said stream by injecting water (or another liquid enabling the same functionality) in the downstream direction of the path. Characteristic to any realization of the nozzle assembly according to the invention is its location on the concave : the nozzle assembly is mounted in a position that enables producing liquid flows from the nozzles which impinge on the concave at a location that is upstream of the impact zone of the particle stream, when the header is in a harvesting position and the cutter drum is rotating within a standard operational speed range. The condition that the header is in a harvesting position is relevant primarily to embodiments wherein the wear plate's angular position is linked to the header position, as described above. In other embodiments, the wear plate 10 is fixed relative to the concave 11, whether or not the header is in the harvesting position. The standard operational speed range of the cutter drum refers to a speed range that is applicable to average harvesting conditions and known crop types that can be harvested by a given type of forage harvester.

In order to comply with the functional requirement described above, i.e. enabling the impingement of the liquid flows upstream of the impact zone, it is clear that the nozzle assembly must be located at a significantly upstream position compared to the impact zone. This is what distinguishes the invention from known configurations, where the nozzles are located more downstream along the discharge path.

According to preferred embodiments illustrated in the drawings, the nozzle assembly 28 is at least partially located within the overlap area 12 between the concave 11 and the wear plate 10. The embodiment of Figure 3 illustrates the case wherein the entire nozzle assembly 28 is located within the overlap area 12, i.e. upstream of the exit edge 25 of the wear plate. Figure 4 illustrates an embodiment wherein the nozzle assembly 28 is partially located within the overlap area 12, i.e. the assembly extends outward from the exit edge 25 over a short distance. The distance is short in the sense that it must still enable the impingement of the liquid flows upstream of the particle stream's impact zone.

These positions of the nozzle assembly 28 are advantageous because they enable an optimization of the water injection relative to the particle stream ejected from the wear plate 10. As illustrated in Figures 3 and 4, the location of the nozzle assembly 28 enables the impinging of water onto the concave 11 at a short distance upstream of the impact location of the particle stream 27 on the concave 11, by adequately adjusting the water flow through the nozzles. This location of the water stream's impingement is optimal for forming a hydrodynamic film between the particle stream 27 and the concave 11, which ensures a maximum anti-plugging effect at the impact zone as well as further downstream along the discharge path of the particle stream.

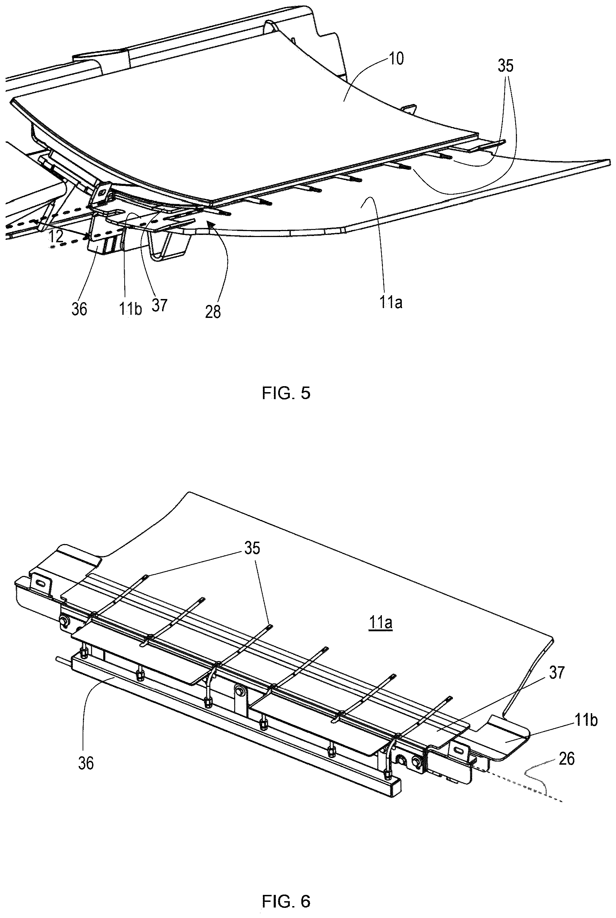

The nozzle assembly 28 is coupled to a liquid supply system (not shown) which may be realized in accordance with known practice, i.e. comprising a tank and a flow circuit provided with means such as valves suitable for regulating the flow of liquid within the circuit. Generically, the nozzle assembly 28 may comprise a collector coupled to the liquid supply system and a plurality of nozzles coupled to said collector. In Figures 3 and 4, the assembly 28 is drawn in a conceptual way as a rectangular box with water streams 29 exiting from the end face of the box, but it can be brought into practice in various ways, including configurations which are known as such. However, some embodiments of the invention include a nozzle assembly having novel and inventive characteristics compared to such known configurations, as illustrated for example by the embodiment shown in Figures 5 and 6. In the image shown in Figure 5, the cutter drum is not included in order to visualize the wear plate 10, while in Figure 6, the wear plate is also omitted. The wear plate is pivotable together with the header in this embodiment. However, Figure 5 shows the wear plate 10 when the header is in a harvesting position.

The concave 11 in this case comprises a curved steel plate 11a for receiving the particle stream from the wear plate 10 and a step plate 11b that is fixed on top of the curved steel plate 11a at its upstream side, i.e. forming a heightened step at the transition between the step plate 11b and the curved receiving surface of the curved plate 11a. Parts of the concave 11 downstream of the plate 11a are not shown in Figures 5 and 6. The step plate 11b is substantially located within the overlap area 12 between the concave 11 and the wear plate 10. The nozzle assembly comprises six equidistant tube-shaped nozzles 35 lying on the step plate 11b, which thereby has the function of defining a distance between the discharge mouths of the nozzle tubes 35 and the curved plate 11a of the concave. The step height may thereby determine, together with the water flow speed and the nozzle diameter, the path of the ejected water streams. The discharge mouths of the nozzle tubes 35 are slightly extending beyond the exit edge 25 of the wear plate 10.

As best seen in Figure 6, the nozzle tubes 35 are coupled to a collector 36 that is fixed to the concave and positioned below the upstream edge 26 of the concave. The tubes 35 extend upward from the collector 36 and are subsequently bent around said upstream edge 26 so as to extend essentially parallel to the step plate 11b in the overlap area 12. A clamping plate 37 that is also fixed to the concave at its upstream side is mounted on top of the nozzle tubes 35, extending transversely with respect to the tubes, to hold these tubes in place during harvesting. The clamping plate 37 is represented as transparent in Figure 6 in order to visualize the nozzle tubes 35, but this plate 37 is non-transparent in practice. The clamping plate 37 could be fixed to the concave 11 in other ways, for example by fixing means at both outer ends of the clamping plate 37.

This configuration is advantageous because of its compactness and ease of installation. The collector 36 is placed below the concave and the nozzles are thin tubes 35 which fit easily between the wear plate 10 and the concave 11 in the overlap area 12. Therefore, this nozzle assembly does not require drilling holes in the concave surface and can be mounted on the concave even when the space between the wear plate 10 and the concave 11 in the overlap area 12 is small.

The embodiment of Figures 5 and 6 includes a number of characteristics which can also be implemented independently from each other according to various embodiments of the invention. For example, a nozzle assembly can be implemented having straight tubes 35 coupled to a collector that is mounted on the upper surface of the concave rather than below the concave. The concave could be fully formed of the curved plate 11a extending further upstream compared to the plate shown in Figures 5 and 6, i.e. without the step plate 11b. The position of the nozzle tubes relative to the concave could be set by other means instead of the step plate, for example by a beam or other type of support. Another way of clamping the nozzles 35 onto the concave can be implemented instead of applying the transverse clamping plate 37.

An advantageous detail of the illustrated embodiment in Figures 5 and 6 is the fact that the discharge mouths of the nozzle tubes 35 are slightly compressed to a flattened or oval shape, which is advantageous in terms of optimizing the shape of the water streams exiting from the discharge mouths. This detail can however be omitted or combined with one or more of the other characteristics described above.

Regardless of how the nozzle assembly 28 is realized, the invention enables an improved method for mitigating plug formation. As stated above, the nozzle position enables optimizing the impingement location of the water discharged from the nozzles. A preferred method of operation is therefore characterized by the act of controlling the water supply system so that the liquid supplied by the nozzles impinges on the concave upstream and close to the particles stream's impact zone on the concave, as illustrated in Figures 3 and 4. Control of the water flow may be done in any manner known in the art, for example by controlling a valve in the water supply circuit. The required water flow and/or pressure for a given cutter drum speed may be determined by simulations or by a number of test sequences. The practical implementation of the method may be realized in various ways. Activation of the nozzle assembly 28 can be done manually or automatically, on the basis of a detection of plug formation by one or more sensors. A control unit of the harvester may be configured so that the activation takes into account the rotational speed of the cutter drum and possible other parameters like the crop type, crop humidity, crop mass flow and crop speed. The control unit then estimates the required water flow for impinging the water streams just upstream of the particle stream's impact zone, and regulates the water flow to the estimated value. The use of one or more sensors of specific types, for detecting plug formation, will be described further in this text.

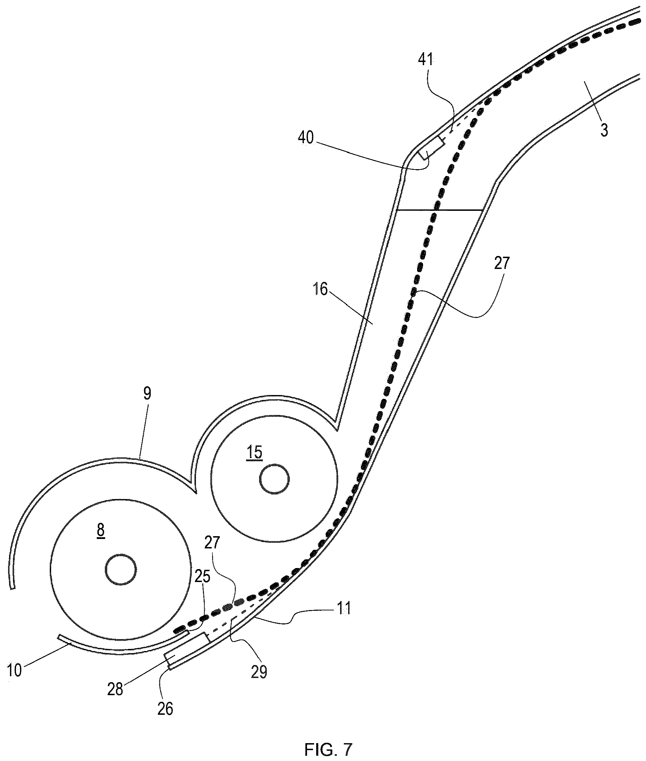

According to embodiments of the invention, a second nozzle assembly 40 is implemented, as illustrated in Figure 7. The image shows how the trajectory of the particle stream 27 ejected from the wear plate 10 continues into the tower duct 16 and the spout 3. The nozzle assembly 28 is again depicted in a version corresponding to Figure 4, i.e. extending outward from the wear plate's exit edge 25. The second nozzle assembly 40 comprises nozzles configured to inject streams 41 of water (or equivalent liquid) in the spout 3, near the location where the spout deviates from the direction of the tower duct 16 to the curved path defined by the spout 3 as such. The location of the nozzle assembly 40 enables impingement of the water just upstream of the impact zone of the particle stream 27 on the interior surface of the upper wall of the duct defined by the spout 3. This is again the optimal impingement location for mitigating crop buildup, this time within the spout 3 of the harvester.

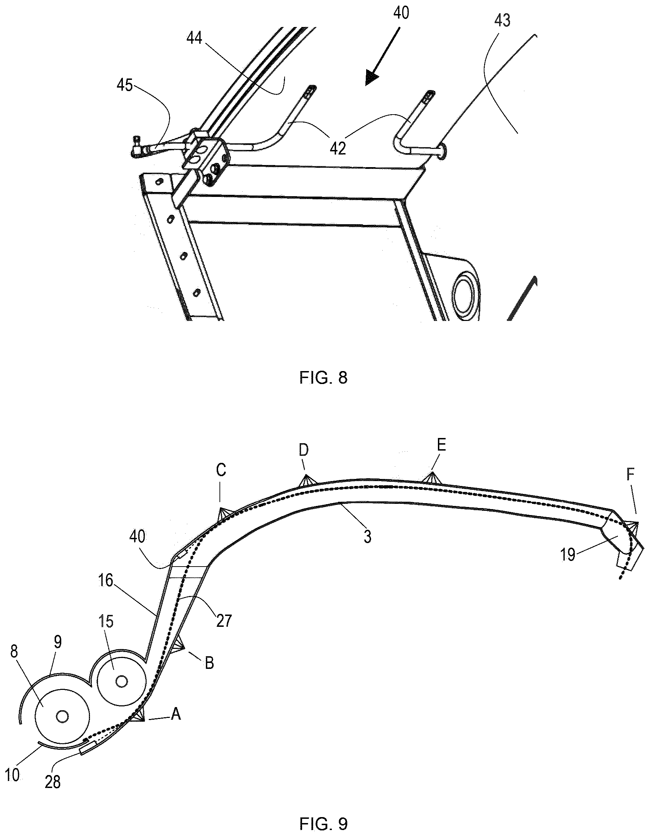

Figure 8 illustrates a possible realization of this second nozzle assembly 40. The image is a cut-away view of the spout region near the deviation of the discharge path. One sidewall of the spout is omitted from the view in order to visualize the nozzles 42. The spout further comprises an upper wall 44 and a lower wall not visible in the drawing. The assembly comprises two tube-shaped nozzles 42 inserted through the sidewalls 43 of the spout and bent inside the spout so that the nozzle discharge mouths are oriented in the direction of the particle stream, in the vicinity of the upper wall 44 of the spout 3. The nozzles 42 are coupled to the liquid supply circuit through flexible tubes 45. The discharge mouths of the nozzle tubes 42 are preferably compressed as described above in relation to the first nozzle assembly 28.

As stated above, the water supply from the nozzles of the first assembly 28 and, if present, of the second assembly 40, is not active continuously, but said supply is activated manually or automatically as a function of the detection of plugging within the discharge path of the harvester. The detection is done by one or more sensors mounted along the discharge path. A non-limiting number of possible sensor locations is illustrated in Figure 9. Preferred sensor locations are locations where plugging and subsequent accumulation of crop material is likely to occur. Sensor locations are indicated symbolically by triangles A to D in Figure 9, but the actual sensor implementation is dependent on the sensor type. Also, sensors can be placed on an exterior surface of the discharge path (for example separated therefrom by a transparent window), or in direct contact with the discharge path, depending on the sensor type. Location A is adjacent the concave 11 downstream of possible impact zones of the particle stream for applicable rotational speeds of the cutter drum, while location B is on the side of the tower duct. Various locations along the spout 3 are suitable for placing sensors, for example locations C, D and E illustrated in the drawing. Location C is in the vicinity of possible impact zones of the particle stream coming out of the tower duct on the upper surface of the spout. Locations D and E are further downstream on the spout, while location F is near the impact area of the particle stream on the deflector 19 in most angular positions of said deflector. Sensors at either of these locations, including the locations C to F on the spout 3, can be coupled to a control unit configured to control the water supply to the nozzles of the first nozzle assembly 28 on the concave and (if present) the second nozzle assembly 40 in the spout, in accordance with embodiments of the invention,.

Preferred embodiments of the invention include a harvester equipped with one or more sensors of a specific type, or combinations of sensors of different types, at one or more of locations A to D or at other locations along the discharge path. These sensors are known as such, but their use for the detection of plugging was not previously described. Some sensor types are able to detect the presence of plugging, i.e. buildup of a layer of crop material at the sensor location; others can sense both the presence of plugging and the thickness of the crop layer building up at the sensor location. A list of applicable sensor types in a harvester of the invention and a brief description of the sensor implementation and capabilities is described in the following list :
- a camera, placed outside the discharge path, for example on the exterior surface of the concave at location A and/or of the spout at location D (but the other locations are also possible). Location D in the spout is advantageous because at this location the camera is still in a curved part of the crop trajectory to guarantee crop is passing close to the camera window for optimal image quality. However, it is not mounted in the first section of the spout to not have the full impact of the crop (and potentially stones) on the camera window. The camera is configured to take images of the discharge path through a transparent window. The camera may be equipped with a LEDs or another light source to illuminate the photographic frame of the captured image. When no crop buildup layer is present at the camera location, consecutive camera images will differ significantly from each other because of the crop particle flow. When the machine is processing crop and consecutive camera images are very similar, there is a high probability of a crop layer buildup at the camera location, which is indicative of the onset of plug formation. A camera is able to detect plug formation but not the thickness of the layer that is forming.
- An optical light sensor, for example a photodiode; This type of sensor is accompanied by a light source and mounted inside the discharge path or similar to the camera, outside the path on a window provided in a wall of the discharge path. Without crop buildup, the sensor signal will show many fluctuations due to the particle flow. Crop buildup will result in a constant signal. Only the presence of plugging is detected, not the thickness of the layer.
- NIR (Near Infra Red) sensor; This type of sensor is already used on the spout of forage harvesters for detecting the composition of the ejected particle stream. The NIR sensor is mounted on the exterior of a wall of the discharge path, on a transparent window, preferably at position C indicated in Figure 9. Similar to cameras and light sensors, an NIR sensor can be used to detect changes in the optical signal it receives. If the signal is constant while having particle flow, the sensor is looking at crop buildup and the onset of plugging. The thickness of the layer is not detected.
- Microwave sensor; The microwave sensor works as a transceiver, sending and receiving microwave signals. This type of sensor can be mounted on a wall of the discharge path at a location where crop buildup is expected, or on a wall opposite said location. The sensor is mounted in an opening in the wall for emitting microwaves inside the discharge path, transversally with respect to the particle stream. By comparing the transmitted and received signals, an indication is obtained of the presence of crop buildup and of the thickness of the crop layer being formed.
- Laser distance sensor; This sensor is mounted in an opening of a wall opposite the location where crop buildup is expected, so that the laser is emitted towards the potentially forming layer. The distance measurement compared to the known distance in the absence of crop buildup provides an indication of layer formation and thickness.
- Ultrasonic distance sensor; The implementation of this sensor type is similar to the laser distance sensor, i.e. in an opening of a wall opposite the location where crop buildup is expected. The distance measurement compared to the known distance in the absence of crop buildup provides an indication of layer formation and thickness.
- Capacitive sensor; This sensor type is mounted in an opening of a wall of the discharge path at a location where crop buildup is expected. A constant signal during crop flow indicates crop buildup. When there is no crop flow, the capacitance value may give an indication of the layer thickness.
- Impedance sensor; This sensor type is mounted on a wall at a location where crop buildup is expected. The sensor comprises two conducting probes mounted in openings of the wall, a certain distance from each other, and the impedance between those contacts is measured. A constant signal during crop flow indicates crop buildup. When there is no crop flow, the impedance value may give an indication of the layer thickness.

## Claims

1. A self-propelled forage harvester comprising a cutter drum (8) that is rotatable about a rotation axis within an operational speed range applicable for standard harvesting conditions, for cutting crops collected by a header (2) mounted at the front of the harvester, the harvester further comprising a discharge path for discharging a stream of cut crop particles, the discharge path comprising consecutively :
- A wear plate (10) facing the cutter drum (8), the wear plate (10) having an exit edge (25) from which a stream of cut particles is ejected when the cutter drum (8) rotates, wherein the wear plate (10) may be pivotable about the rotation axis of the cutter drum (8), as a function of the header position,
- a concave (11) for receiving said stream of particles on an impact zone of the concave (11), and guiding it further along the discharge path, the concave (11) having an upstream edge (26), wherein the concave (11) overlaps the wear plate (10) in an overlap area (12) extending between the concave's upstream edge (26) and the wear plate's exit edge (25),
- an accelerator (15) for accelerating the stream of particles,
- an upwardly oriented tower duct (16) for directing the accelerated stream upwards,
- a spout (3) configured to receive the accelerated stream from the tower duct (16) and eject the particle stream from the harvester,
wherein the harvester further comprises a nozzle assembly (28) comprising a plurality of nozzles (35) distributed transversely with respect to the discharge path, for directing flows of liquid in the downstream direction of the discharge path, **characterised in that** the nozzle assembly (28) is mounted on the concave (11) and located in a position that enables producing liquid flows from the nozzles which impinge on the concave (11) at a location that is upstream of the impact zone of the particle stream, when the header is in a harvesting position and the cutter drum (8) is rotating within said operational speed range.

2. The harvester according to claim 1, wherein the nozzle assembly (28) is positioned at least partially within the overlap area (12) between the concave (11) and the wear plate (10).

3. The harvester according to claim 1 or 2, wherein the nozzle assembly (28) comprises a liquid collector (36) and a plurality of tube-shaped nozzles (35) connected to the liquid connector and having discharge mouths configured to eject a liquid flow.

4. The harvester according to claim 3, wherein the discharge mouths of the nozzles (35) have a flattened or oval shape.

5. The harvester according to claim 3 or 4, wherein the collector (36) is mounted below the upstream edge (26) of the concave (11) and wherein the tube-shaped nozzles (35) are bent around said upstream edge (26) so as to guide the liquid upward from the collector (36) and subsequently in the downstream direction of the discharge path.

6. The harvester according to any one of claims 3 to 5, wherein the concave (11) comprises a curved plate (11a) configured to receive the particle stream, and a step plate (11b) lying on the curved plate (11a) near the upstream edge (26) of the concave and wherein the tube-shaped nozzles (35) are supported by the step plate (11b) so that the height of the step plate determines the distance between the discharge mouths of the nozzles (35) and the curve plate (11a).

7. The harvester according to any one of claims 3 to 6, wherein the tube-shaped nozzles (35) are clamped to the concave (11) by a clamping plate (37) extending transversely with respect to the nozzles.

8. The harvester according to any one of the preceding claims, wherein :
- the spout (3) forms a duct comprising two sidewalls (43), a lower wall and an upper wall (44),
- the spout (3) is configured to receive the accelerated particle stream in a second impact zone on the internal surface of the upper wall (44) before guiding the stream of particles out of the harvester,
- the harvester further comprises a second nozzle assembly (40) mounted on the internal surface of the upper wall of the spout (3) and located in a position that enables producing liquid flows (41) from the nozzles of the second assembly which impinge on said internal surface at a location that is upstream of the second impact zone of the particle stream, when the header is in a harvesting position and the cutter drum (8) is rotating within said operational speed range.

9. The harvester according to claim 7, wherein the second nozzle assembly (40) comprises two tube-shaped nozzles (42) inserted through the respective two sidewalls (43) and bent inside the spout (3) so as to guide the liquid flows (41) through the sidewalls and subsequently in the downstream direction of the discharge path.

10. The harvester according to claim 9, wherein the discharge mouths of the nozzles (42) of the second nozzle assembly (40) have a flattened or oval shape.

11. The harvester according to any one of the preceding claims, wherein the harvester furthermore comprises :
- one or more sensors mounted at one or more sensor locations (A-E) along the discharge path and configured to detect a buildup of crop material at the sensor locations,
- a control unit configured to receive signals from the one or more sensors, and to activate the supply of liquid through the nozzles of the nozzle assembly (28) mounted on the concave (11), when a buildup of crop material is detected at the one or more sensor locations,
and wherein the one or more sensors are sensors of one or more of the following sensor types :
- a camera,
- an optical light sensor,
- a Near Infra Red sensor,
- a microwave sensor,
- a laser distance sensor,
- an ultrasound distance sensor,
- a capacitive sensor,
- an impedance sensor.

12. A method for controlling the supply of liquid from the nozzle assembly (28) mounted on the concave (11) of a forage harvester (1) according to any one of the preceding claims, the method comprising the steps of :
- monitoring the formation of crop buildup at one or more locations along the discharge path,
- when crop build-up is detected, activating the nozzle assembly (28) on the concave (11) to thereby discharge a liquid in the downstream direction of the discharge path,
wherein the liquid flow is controlled so that liquid ejected from the nozzle assembly impinges on the concave (11) at a location upstream of the impact zone of the particle stream on the concave, and in close proximity to said impact zone.

13. A method for controlling the supply of liquid from the nozzle assembly (28) mounted on the concave (11) of a forage harvester (1) according to any one of claims 8 to 10, the method comprising the steps of:
- monitoring the formation of crop buildup at one or more locations along the discharge path,
- when crop build-up is detected, activating the nozzle assembly (28) on the concave (11) and/or the nozzle assembly (40) on the internal surface of the upper wall (44) of the spout (3), to thereby discharge a liquid in the downstream direction of the discharge path,
wherein the liquid flow is controlled so that liquid ejected from the nozzle assemblies (28,40) impinge respectively on the concave (11) and on said internal surface at a location upstream of the respective first and second impact zone of the particle stream, and in close proximity to said impact zones.

14. A method according to claim 12 or 13, wherein said monitoring is performed by one or more sensors configured to detect crop buildup along the discharge path at the sensor location, and wherein activating a nozzle assembly (28,40) is performed automatically upon detection of said crop buildup.
